# EUROPEAN PATENT APPLICATION

(11) **EP 2 264 966 A1**
(43) Date of publication of application: **22.12.2010**
(21) Application number: 09290468.9
(22) Date of filing: 19.06.2009
(51) Int. Cl.: H04L 27/26, H04L 5/00

(54) **Joint processing of uplink data in a wireless communication network**

(71) Applicant: Alcatel Lucent, 75008 Paris (FR)
(72) Inventor: Gerlach, Christian, 71254 Ditzingen (DE)
(74) Representative: Kohler Schmid Möbus

(57) **Abstract**

The invention relates to a method for joint processing of uplink data (g(n), s(n)) transmitted from at least one user equipment (UE1, UE2) to a plurality of coordinated reception points (BS_{A}, BS_{B}) of a wireless communication system, the method comprising: compensating timing differences (τ) caused by different timing delays of the uplink data (g(n), s(n)) transmitted from one user equipment (UE1, UE2) to different coordinated reception points (BS_{A}, BS_{B}) by performing a time shift on one or more uplink-received signals (r_{A}(t), r_{B}(t)) received in the coordinated reception points (BS_{A}, BS_{B}) for aligning time domain samples (vₐ₀(n), v_{b0}(n)) of the uplink data (s(n)) in a common processing window (W1), and performing the joint processing on the time domain samples (vₐ₀(n), v_{b0}(n)) using the common processing window (W1). The invention also relates to a processing arrangement for performing the method, to a base station, and to a wireless communication network.

## Description

### Field of the Invention

The invention relates to the field of signal processing in wireless communication networks, and, in particular, to joint processing of uplink data transmitted from user equipments to coordinated reception points in a wireless communication network.

### Background

This section introduces aspects that may be helpful in facilitating a better understanding of the invention. Accordingly, the statements of this section are to be read in this light and are not to be understood as admissions about what is in the prior art or what is not in the prior art.

When performing joint processing (JP) of uplink coordinated multi-point transmissions (so-called COMP), one has to deal with multi-path propagations leading to different timing / propagation delays to the different reception points (e.g. base stations) of a COMP coordination cluster. If the difference of the timing offsets due to the different propagation delays exceeds the length reserved for the cyclic prefix in an Orthogonal Frequency Division Multiplex, OFDM, transmission scheme, the joint processing of the uplink signals of different COMP reception points in a single receiver is typically no longer possible. The reception points may for example be located in different base stations (BS), being devised e.g. in the form of enhanced NodeBs "eNBs". It will be understood that joint processing may also be performed in transmission schemes which are derived from the "classical" OFDM transmission scheme, for example single-carrier (SC)-OFDMA, which may be viewed as a single carrier multiple access scheme, or as a linearly pre-coded OFDMA scheme.

For taking the different timing offsets into account, 3GPP has defined two different cyclic prefixes (CP), a normal and an extended one. To allow for joint processing, the length of the extended cyclic prefix can be configured to allow for a corresponding maximum difference of the timing offsets (delay spread) of the uplink radio signals received in the different reception points. However, using such an extended cyclic prefix has the disadvantage of generating an additional overhead, which reduces the achievable overall uplink throughput. With the normal cyclic prefix, 14 OFDM symbols can be used for the transmission within one sub-frame of the duration of 1 ms. Using the extended cyclic prefix allows for transmitting only 12 OFDM symbols per sub-frame. Using the extended cyclic prefix instead of the conventional cyclic prefix thus results in a throughput reduction that amounts to about 20 percent. Thus, there is a need to increase the throughput in coordinated uplink processing.

### Summary of the Invention

One aspect of the invention relates to a method for joint processing of uplink data transmitted from at least one user equipment to a plurality of coordinated reception points of a wireless communication system, the method comprising: compensating timing differences caused by different timing delays of the uplink data transmitted from one user equipment to different coordinated reception points by performing a time shift on one or more uplink-received signals received in the coordinated reception points for aligning time domain samples of the uplink data in a common processing window, and performing the joint processing on the time domain samples using the common processing window.

In coordinated uplink processing, uplink data from one user equipment is received in different coordinated reception points (in the following also referred to as base stations or cells). Typically, only one of the reception points, the so-called "serving" reception point is used for serving the user equipment, i.e. for transmitting downlink data to the user equipment. For the serving reception point, a timing advance (TA) is performed which aligns the timing of the user equipment to the serving reception point in the following way: A processing window for performing a time-to-frequency-domain transformation, in particular a Fast-Fourier-Transformation, FFT, on the time-domain samples of the uplink-received signal in the serving reception point is synchronized to the signal frame boundaries of the uplink data, for instance being OFDMA symbol boundaries. For this purpose, a dedicated timing delay / offset estimation within the layer1 processing of the serving reception point may be used.

However, for performing joint processing of the uplink data transmitted from one user equipment to different reception points, the time-domain samples contained in the uplink-received signals of the non-serving reception points need to be taken into account as well. As the time-domain samples in these uplink-received signals are not time-aligned with the time-domain samples received in the serving reception point due to the different propagation delays, it is proposed to perform a time shift on the uplink-received signal(s) of the non-serving receiving point(s), thus allowing to align all the time-domain samples received from one user equipment in a common processing window.

In such a way, joint processing may be performed even if the difference in the propagation delays from one user equipment to different reception points exceeds the length of the cyclic prefix used in classical OFDMA-based systems. As the solution proposed above compensates for the propagation delay differences of the COMP cells / reception points, a type of cyclic prefix may be used that is appropriate for the multi-path propagation conditions, disregarding the timing offset to the non-serving COMP reception points. Hence, there is no need to increase the overhead when applying the COMP reception scheme.

In one variant, the uplink-received signals are transferred between the reception points using a framed transmission, preferably using an X2 interface. For performing the joint processing, the uplink-received signals - typically containing the (demodulated) time domain samples - have to be exchanged between the reception points and/or a centralized processing unit which may be arranged in a backhaul network connected to the different coordinated reception points. Typically, the transfer of the uplink-received signals is performed in a packet-based, framed transmission scheme. However, it may also be possible to transfer the uplink-received signals using a non-framed, i.e. continuous transmission scheme.

In a further variant, transmission frames are filled up to comprise signals exceeding an OFDM symbol or signal frame boundary for an additional surplus time to include further signal parts, the surplus time preferably corresponding to a maximum propagation delay of the uplink data from the user equipment to the coordinated reception points. In other words, the time-domain samples are transmitted with a frame interval that is delayed compared to the OFDM symbol or sub-frame interval by the surplus time, thus allowing to capture also delayed uplink-transmitted signals (including their OFDM symbol border) from interfering user equipments of non-serving neighboring reception points. When the uplink received signals are transferred between the reception points using a framed transmission the information contained at the start of the OFDM symbol is either transmitted twice or it is taken from the previous packet, as will be readily understood by those skilled in the art. By setting the surplus time to the maximum propagation delay of the uplink data from the user equipments to the coordinated reception points, the contributions of the time-domain samples received in all coordinated reception points can be taken into account for the joint processing without losing relevant information.

Another variant comprises: selecting, from the plurality of user equipments, one user equipment for which the uplink data is to be processed, the selection being based on the receiver strength of the uplink data in the coordinated reception points, preferably selecting the user equipment having maximum receiver strength for performing the joint processing and/or joint decoding. It will be understood that the term "receiver strength" relates to the strength (e.g. receive power) of the time-domain samples after the channel coming from one user equipment in the uplink-received signals. Typically, the receiver strength of the uplink data of one user equipment is maximum in its corresponding serving reception point, which facilitates the selection of the correct user equipment for the processing/decoding.

In one improvement of this variant, the method further comprises the following step [step a)]: after successfully performing the joint decoding of the time domain samples of uplink-received signals which are received in the different reception points using the shifted time base(s), generating modified uplink-received signals by subtracting the re-encoded time-domain samples from the shifted received uplink signals. Thus, after joint decoding of the time domain samples of the selected user equipment in the common processing window, the re-encoded time-domain samples are subtracted from the uplink-received signals in the right timing location, thus eliminating their interference contribution in the modified uplink-received signals. For deciding if the joint decoding has been successful, a CRC check may be performed.

A further improvement of this variant comprises the following step [step b)]: selecting a further user equipment from the plurality of user equipments based on the receiver strength of the uplink data in the modified uplink-received signals, preferably selecting the user equipment having maximum receiver strength; performing a time shift on at least one modified uplink-received signal for aligning time domain samples of the uplink data in a common processing window; and performing the joint processing and decoding on the time domain samples of the modified uplink-received signals for the selected user equipment in the common processing window. Thus, joint processing of the uplink data of a further user equipment is performed without interference due to the uplink data from the user equipment which has been previously processed and successfully decoded.

It will be readily understood that by successively repeating step a) and step b), it is possible to process the uplink data of all (in this case: three or more) user equipments being served by the coordinated reception points.

In a further variant, uplink transmissions from the at least one user equipment to the coordinated reception points are performed in an orthogonal frequency division multiplex, OFDM or a Single Carrier-Frequency Division Multiple Access, SC-FDMA, transmission scheme. The common processing window is then synchronized with the individual OFDM symbol or signal frame boundaries, respectively. It will be understood that the method described above may also be employed for other types of transmission schemes.

The method described above may be implemented in a computer program product, i.e. in a suitable software or hardware, in particular a field programmable gate array (FPGA), an application-specific integrated circuit (ASIC), or a digital signal processor (DSP). In particular, the computer program product may be implemented in a receiver, e.g. located in a base station.

A further aspect is implemented in a processing arrangement for joint processing of uplink data transmitted from at least one user equipment to a plurality of coordinated reception points of a wireless communication system, the processing arrangement being adapted for: compensating timing differences caused by different timing delays of the uplink data transmitted from one user equipment to different coordinated reception points by performing a time shift on one or more uplink-received signals received in the coordinated reception points for aligning time domain samples of the uplink data in a common processing window, the processing arrangement being further adapted for: performing the joint processing on the time domain samples using the common processing window. The processing arrangement may comprise one or more of the reception points, being adapted for performing the alignment and the joint processing in the way described above. Alternatively, the alignment of the time-domain samples and the joint processing may be performed in a centralized unit, e.g. being arranged in an (IP) data network which is connected to the coordinated reception points.

In one embodiment, the processing arrangement comprises at least two coordinated reception points, the uplink-received signals being transferred between the reception points using a framed transmission, preferably using an X2 interface. The processing arrangement may in particular be adapted for filling up transmission frames comprising signals exceeding an OFDM symbol or signal frame boundary for an additional surplus time to include further signal parts, the surplus time preferably corresponding to a maximum propagation delay of the uplink data from the user equipment to the coordinated reception points. By shifting the time interval for transmitting data frames of the packet-based transmission by a pre-defined delay time with respect to the frame borders in the time base of the reception point which performs the data transfer (sender), delayed signal components originating from user equipments which are not served by that reception point are not cut off at the end of the transmission frame, such that no information which may be used for the joint processing is lost.

In a further embodiment, the processing arrangement is adapted for: selecting, from the plurality of user equipments, one user equipment for which the uplink data is to be processed, the selection being based on the receiver strength of the uplink data in the coordinated reception points, preferably selecting the user equipment having maximum receiver strength for performing the joint processing and/or joint decoding. Thus, typically, the uplink data of the user equipment having maximum receiver strength is processed first.

Further embodiments of the processing equipment are adapted to perform the steps a) and b) of the method as described above. It will be readily understood that the processing equipment may also be adapted for repeatedly performing these steps, thus allowing for successive processing of the uplink data from all of the user equipments being served by the coordinated reception points.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: shows a schematic diagram of an embodiment of a wireless communication network according to the invention,
- **Figs. 2a,b**: show schematic diagrams of uplink-received signals received in two base stations serving as coordinated reception points in the network of Fig. 1, and
- **Fig. 3**: shows a schematic diagram of transmit frames for transferring the uplink-received signals, the transmit frames being delayed by a surplus time with respect to corresponding OFDM symbol frames.

### Detailed Description of Preferred Embodiments

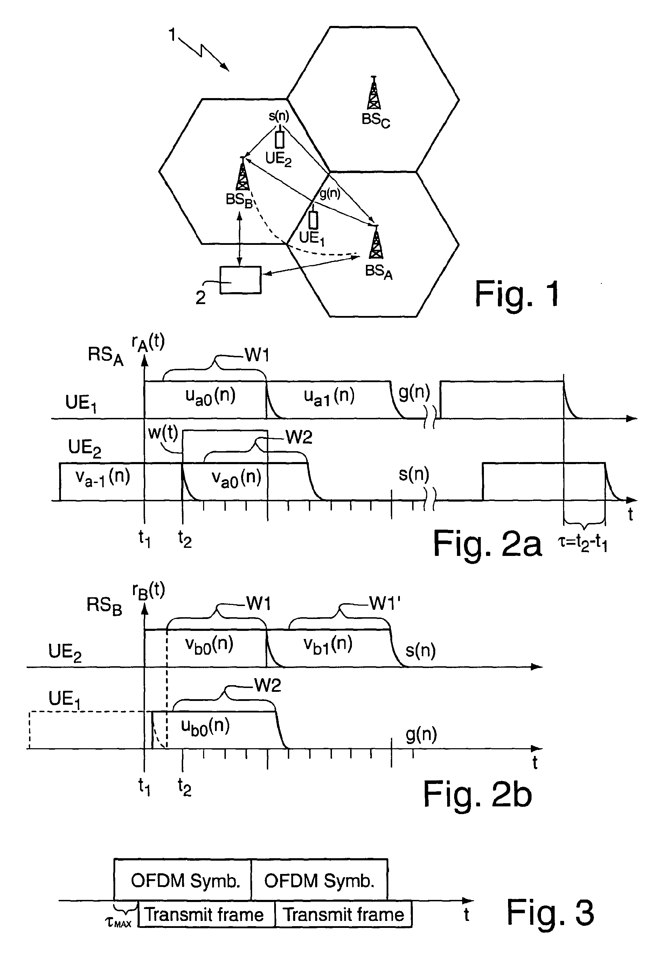

**Fig. 1** shows a wireless communication network **1** which may be in compliance with e.g. the Long-Term Evolution, LTE, standard, the WiMax standard, or another wireless communication standard. The wireless communication network 1 has a plurality of user equipments. However, for the sake of simplicity, only a first and a second user equipment **UE1, UE2** are shown in Fig. 1. The first user equipment UE1 is served by a first base station **BS_{A},** and the second user equipment UE2 is served by a second base station **BS_{B}** of the network 1.

The term "serving" base station refers to the provisioning of downlink data from the respective base station BS_{A}, BS_{B} to the user equipment UE1, UE2, typically the serving base station BS_{A}, BS_{B} being the one having the highest receive strength for the served user equipment. Each base station BS_{A}, BS_{B} covers an area which defines a cell, being represented by a hexagon in Fig. 1.

The first and second user equipment UE1, UE2 transmit their respective uplink data **g(n), s(n)** both to the first and to the second base station BS_{A}, BS_{B}. The base stations BS_{A}, BS_{B} thus form coordinated reception points for performing coordinated multi-point transmission (COMP) of the uplink data g(n), s(n) and are in this example operatively connected to a centralized unit 2 for performing joint processing (JP) of the uplink data, the centralized unit 2 being arranged at a remote location, e.g. in a (high-speed) data network being connected to the base stations BS_{A}, BS_{B}. The first and second base stations BS_{A}, BS_{B} are coordinated, whereas a third base station **BS_{C}** being arranged in the network 1 does not form part of the COMP coordination cluster, as the latter is defined in the present example by the first and second base stations BS_{A}, BS_{B} only.

One skilled in the art will appreciate that alternatively, the coordinated reception points may be implemented as different sectors (corresponding e.g. to remote radio heads, RRHs) of the same base station, a processing unit of the base station serving as a centralized unit in this case (the propagation delays of the uplink signal in the sectors being different e.g. due to different multiple reflections and distances).

Also, instead of performing the joint processing in the centralized unit 2, it is possible to perform the joint processing of the uplink data originating from one user equipment in one of the base stations, typically the serving base station of the respective user equipment. In this case, the data of the at least one non-serving base station will be transferred to the serving base station, e.g. over a cable connection or a data network as indicated by a dashed line in Fig. 1. In the latter case, the first base station BS_{A} may after performing successive joint processing of the uplink data from the user equipments stop decoding after uplink data g(n) from the first user equipment UE1 is decoded, and the second base station BS_{B} may after performing successive joint processing of the uplink data from the user equipments stop decoding after uplink data s(n) from the second user equipment UE2 is decoded, as will be explained in greater detail below.

In the following, time synchronicity and also frequency synchronicity of the base stations BS_{A}, BS_{B} and thus also frequency synchronicity of the uplink data g(n), s(n) will be assumed. Further, it will be assumed that in each base station BS_{A}, BS_{B}, the uplink data g(n), s(n) will be received in an individual time base which is aligned to the propagation delay of the user equipment UE1, UE2 served by the respective base station BS_{A}, BS_{B}. Such an alignment may be performed by using a timing advance command which is implemented in the base stations BS_{A}, BS_{B}, the timing advance including an estimation of the propagation delay.

For the first base station BS_{A}, a first uplink-received signal **r_{A}(t)** is represented in **Fig. 2a**, showing in the upper part time domain samples after channel transmission **uₐ₀(n), uₐ₁(n),** ...(coming in the present example from OFDM symbols) of the uplink data g(n) transmitted from the first user equipment UE1 which is served by the first base station BS_{A}. The uplink data g(n), resp., the time domain samples u ₐ₀ (n), u ₐ₁(n), belonging to OFDM symbols are time-aligned to a respective FFT processing window **W1,** covering only the back portion of the channel transmitted OFDM symbols uₐ₀(n), uₐ₁(n) which does not contain the cyclic prefix. Thus, the signal g(n) received from the served first user equipment UE1 in the first base station BS_{A} is in its optimum position for processing / decoding. An analogous time alignment of a corresponding processing window W1 is also performed for time domain samples **v_{b0}(n),** v_{b1}(n), ... of the uplink data s(n) transmitted from the second user equipment UE2, the time domain samples v_{b0}(n), v_{b1}(n), ... being contained in a second uplink-transmitted signal **r_{B}(t)** in the second base station BS_{B}, cf. **Fig. 2b****.**

The lower part of Fig. 2a shows channel transmitted OFDM symbols **vₐ₋₁(n), vₐ₀(n),** ... of the uplink data s(n) received from the second user equipment UE2 in the first base station BS_{A}. As can be seen from Fig. 2a, the time domain samples vₐ₋₁(n), vₐ₀(n) of the uplink data s(n) transmitted from the second user equipment UE2 are shifted by a timing difference τ= t₁ - t₂ with respect to the time domain samples uₐ₀(n), uₐ₁(n) of the first user equipment UE1, the timing difference τ being due to the different propagation delays of signals transmitted from the first and the second user equipment UE1, UE2 to the first base station BS_{A}. As can also be gathered from Fig. 2a, the correct position of a FFT processing window **W2** for processing the time domain samples vₐ₋₁(n), vₐ₀(n) received from the second user equipment UE2 is also shifted by the timing difference τ with respect to the first processing window W1.

In a similar way, time domain samples u_{b0}(n) of the uplink data g(n) of the first user equipment UE1 contained in the uplink-received signal r_{B}(t) of the second base station BS_{B} are shifted by a (different) timing difference with respect to the time domain samples v_{b0}(n), v_{b1}(n) of the uplink data s(n) of the first user equipment UE1, see Fig. 2b. It will be understood that the respective timing difference τ can be determined in the base stations by performing a timing estimation in a way known in the art (being used e.g. for performing the timing advance).

For joint processing of the uplink signals g(n), s(n), based on the receive strength (signal power) of the time domain samples uₐ₀ and u_{b0} or vₐ₀ and v_{b0} in the uplink-received signals r_{A}(t), r_{B}(t) in the base stations BS_{A}, BS_{B}, it is decided which of the user equipments UE1, UE2 will be processed first. In the present example, the receive strength of the second user equipment UE2 is larger than that of the first user equipment UE1, such that the uplink data s(n) of the second user equipment UE2 will be processed first.

For joint processing / detecting the signal s(n) transmitted from the second user equipment UE2, in a first step, the uplink-received signal r_{A}(t) of the first base station BS_{A} is shifted to the left until the time domain samples vₐ₀(n) of the uplink signal s(n) of the second user equipment UE2 are time aligned with the time domain samples v_{b0}(n) in the uplink-received signal r_{B}(t) (implying that the time domain samples uₐ₀(n) and u_{b0}(n) of the uplink signal g(n) of the first user equipment UE1 are no longer time aligned). In the following, channel estimations of a MIMO channel matrix for both channels (both base stations BS_{A}, BS_{B}) are performed in the usual way, and, subsequently, two FFTs based on FFT-Window W1 position are performed in the second (serving) base station BS_{B} or both. Thus, detecting / decoding a sample s₀(n) of the uplink data s(n) of the second user equipment UE2 may be performed using the time-shifted uplink-received signal r_{A}(t) of the first base station BS_{A} and the (unshifted) uplink-received signal r_{B}(t) of the second base station BS_{B}.

If successfully decoded, re-encoded time domain samples vₐ₀(n) and v_{b0}(n) are subtracted from both the shifted uplink-received signal r_{A}(t) and the un-shifted uplink-received signal r_{B}(t) in the correct timing location which results in two modified uplink-received signals r_{A}'(t), r_{B}'(t). In the following, the steps described above with respect to the second user equipment UE2 can be repeated for the first user equipment UE1, albeit on the modified uplink-received signals r_{A}'(t), r_{B}'(t):
First, a time shift is performed on the modified uplink received signal r_{B}'(t) of the second base station BS_{B} for aligning respective time domain samples uₐ₀(n), u_{b0}(n) of the uplink data g(n) of the first user equipment UE1 in a common processing window W1 in the time base of the first base station BS_{A}. In a following step, the joint processing is performed on the time-aligned time domain samples uₐ₀(n), u_{b0}(n) of the modified uplink signals r_{A}'(t), r_{B}'(t) for the first user equipment UE1 in the common processing window W1. The joint processing then comprises performing two channel estimations for the first user equipment UE1, and, with removed interference, the uplink data OFDM symbol g₀(n) generated and transmitted from the first user equipment UE1 is detected and decoded.

It will be understood that re-encoded time domain samples uₐ₀(n), u_{b0}(n) may be subtracted form the time-adjusted, modified uplink-received signals r_{A}'(t), r_{B}'(t) if uplink data from further processing units has to be processed. In such a way, joint processing of the uplink data from more than the two user equipments UE1, UE2 shown in Fig. 1 may be performed.

For the joint processing, the uplink-received signals r_{A}(t), r_{B}(t) have to be transferred between the respective base stations BS_{A}, BS_{B} and/or the centralized unit 2, respectively. For this purpose, a framed transmission may be used, for example using an X2 or other suitable interface. As will be apparent from Figs. 2a,b, when using such a framed transmission, care should be taken that time domain samples from the respective non-serving base stations contained in the uplink-received signals r_{A}(t), r_{B}(t) are not cut off at the end of the transmission frame. The latter will typically be the case when the receive signal r_{A}(t) is cut off for frame filling in synchronism with the channel transmitted OFDM symbol described by time domain samples uₐ₀(n), as in this case, the frame border of the OFDM symbol typically coincides with the frame border of the frame used for the framed transmission.

In order to also transmit the time domain samples (e.g. I/Q samples after the A/D-converter ) which are delayed with respect to the time base of the corresponding base station BS_{A}, BS_{B}, it is proposed to delay the transmission frames by a surplus time τₘₐₓ which may correspond to a maximum propagation delay of the uplink data g(n), s(n) from the user equipments UE1, UE2 to the respective coordinated reception point BS_{A}, BS_{B} (see Fig. 3). In such a way, the necessary information for performing the joint processing is contained and will be transmitted in a single transmission frame.

One skilled in the art will appreciate that although the above description has been given with respect to the OFDM transmission scheme, the principles described above may equally well be applied to other transmission schemes, in particular to the SC-FDMA transmission scheme or other modifications of the OFDMA transmission scheme.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

## Claims

1. Method for joint processing of uplink data (g(n), s(n)) transmitted from at least one user equipment (UE1, UE2) to a plurality of coordinated reception points (BS_{A}, BS_{B}) of a wireless communication system (1), the method comprising:
compensating timing differences (τ) caused by different timing delays of the uplink data (g(n), s(n)) transmitted from one user equipment (UE1, UE2) to different coordinated reception points (BS_{A}, BS_{B}) by performing a time shift on one or more uplink-received signals (r_{A}(t), r_{B}(t)) received in the coordinated reception points (BS_{A}, BS_{B}) for aligning time domain samples (vₐ₀(n), v_{b0}(n)) of the uplink data (s(n)) in a common processing window (W1), and
performing the joint processing on the time domain samples (vₐ₀(n), v_{b0}(n)) using the common processing window (W1).

2. Method according to claim 1, wherein the uplink-received signals (r_{A}(t), r_{B}(t)) are transferred between the reception points (BS_{A}, BS_{B}) using a framed transmission, preferably using an X2 interface.

3. Method according to claim 2, wherein transmission frames are filled up to comprise signals exceeding an OFDM symbol or signal frame boundary for an additional surplus time (τₘₐₓ) to include further signal parts, the surplus time (τₘₐₓ) preferably corresponding to a maximum propagation delay of the uplink data (g(n), s(n)) from the user equipment (UE1, UE2) to the coordinated reception points (BS_{A}, BS_{B}).

4. Method according to claim 1, further comprising: selecting, from the plurality of user equipments (UE1, UE2), one user equipment (UE2) for which the uplink data (g(n), s(n)) is to be processed, the selection being based on the receiver strength of the uplink data (g(n), s(n)) in the coordinated reception points (BS_{A}, BS_{B}), preferably selecting the user equipment (UE2) having maximum receiver strength for performing the joint processing and/or joint decoding.

5. Method according to claim 4, further comprising the following step [step a)]:
after performing the joint decoding of the time domain samples (vₐ₀(n); v_{b0}(n)) of uplink-received signals (r_{A}(t), r_{B}(t)) received in the different reception points (BS_{A}, BS_{B}) using the shifted time base(s), generating modified uplink received signals (r_{A}'(t), r_{B}'(t)) by subtracting the re-encoded time-domain samples (vₐ₀(n); v_{b0}(n)) from the time-shifted received uplink signals (r_{A}(t), r_{B}(t)).

6. Method according to claim 5, further comprising the following step [step b)]:
selecting a further user equipment (UE1) from the plurality of user equipments (UE1, UE2) based on the receiver strength of the uplink data (g(n), s(n)) in the modified uplink received signals (r_{A}'(t), r_{B}'(t)), preferably selecting the user equipment (UE1) having maximum receiver strength, performing a time shift on at least one of the modified uplink-received signals (r_{A}'(t), r_{B}'(t)) for aligning time domain samples (uₐ₀(n), u_{b0}(n)) of the uplink data (g(n)) in a common processing window (W1), and performing the joint processing on the time domain samples (uₐ₀(n), u_{b0}(n)) of the modified uplink-received signals (r_{A}'(t), r_{B}'(t)) for the selected user equipment (UE1) using the common processing window (W1).

7. Method according to claim 6, further comprising: successively repeating step a) and step b) until the uplink data (g(n), s(n)) of all the user equipments (UE1, UE2) has been processed.

8. Method according to claim 1, wherein uplink transmissions from the at least one user equipment (UE1, UE2) to the coordinated reception points (BS_{A}, BS_{B}) are performed in an orthogonal frequency division multiplex, OFDM, or a single carrier frequency division multiple access, SC-FDMA, transmission scheme.

9. Processing arrangement (BS_{A}, BS_{B}; 2) for joint processing of uplink data (g(n), s(n)) transmitted from at least one user equipment (UE1, UE2) to a plurality of coordinated reception points (BS_{A}, BS_{B}) of a wireless communication system (1), the processing arrangement being adapted for:
compensating timing differences (τ) caused by different timing delays of the uplink data (g(n), s(n)) transmitted from one user equipment (UE1, UE2) to different coordinated reception points (BS_{A}, BS_{B}) by performing a time shift on one or more uplink-received signals (r_{A}(t), r_{B}(t)) received in the coordinated reception points (BS_{A}, BS_{B}) for aligning time domain samples (vₐ₀(n), v_{b0}(n)) of the uplink data (s(n)) in a common processing window (W1), the processing arrangement being further adapted for:
performing the joint processing on the time domain samples (vₐ₀(n), v_{b0}(n)) using the common processing window (W1).

10. Processing arrangement according to claim 9, comprising at least two coordinated reception points (BS_{A}, BS_{B}), the processing arrangement being adapted for transferring uplink-received signals (r_{A}(t), r_{B}(t)) between the reception points (BS_{A}, BS_{B}) using a framed transmission, preferably using an X2 interface, the processing arrangement being in particular adapted for filling up transmission frames to comprise signals exceeding an OFDM symbol or signal frame boundary for an additional surplus time (τₘₐₓ) to include further signal parts, the surplus time (τₘₐₓ) preferably corresponding to a maximum propagation delay of the uplink data (g(n), s(n)) from the user equipment (UE1, UE2) to the coordinated reception points (BS_{A}, BS_{B}).

11. Processing arrangement according to claim 9, being further adapted for:
selecting, from the plurality of user equipments (UE1, UE2), one user equipment (UE2) for which the uplink data (g(n), s(n)) is to be processed, the selection being based on the receiver strength of the uplink data (g(n), s(n)) in the coordinated reception points (BS_{A}, BS_{B}), preferably selecting the user equipment (UE2) having maximum receiver strength for performing the joint processing and/or joint decoding.

12. Processing arrangement according to claim 11, being further adapted for:
after performing the joint decoding of the time domain samples (vₐ₀(n); v_{b0}(n)) of uplink-received signals (r_{A}(t), r_{B}(t)) received in the different reception points (BS_{A}, BS_{B}) using the shifted time base(s), generating modified uplink received signals (r_{A}'(t), r_{B}'(t)) by subtracting the re-encoded time-domain samples (vₐ₀(n); v_{b0}(n)) from the shifted received uplink signals (r_{A}(t), r_{B}(t)).

13. Processing arrangement according to claim 12, being further adapted for:
selecting a further user equipment (UE1) from the plurality of user equipments (UE1, UE2) based on the receiver strength of the uplink data (g(n), s(n)) in the modified uplink received signals (r_{A}'(t), r_{B}'(t)), preferably selecting the user equipment (UE1) having maximum receiver strength, performing a time shift on the modified uplink-received signals (r_{A}'(t), r_{B}'(t)) for aligning time domain samples (uₐ₀(n), u_{b0}(n)) of the uplink data (g(n)) in a common processing window (W1), and performing the joint processing on the time domain samples (uₐ₀(n), u_{b0}(n)) of the modified uplink-received signals (r_{A}'(t), r_{B}'(t)) for the selected user equipment (UE1) in the common processing window (W1).

14. Base station (BS_{A}; BS_{B}) comprising a processing arrangement according to claim 9.

15. Wireless Communication Network (1) comprising at least one processing arrangement (BS_{A}, BS_{B}; 2) according to claim 9.
